# EUROPEAN PATENT SPECIFICATION

(11) **EP 1 003 675 B1**
(45) Date of publication and mention of the grant of the patent: **02.11.2005**
(21) Application number: 99931807.4
(22) Date of filing: 16.06.1999
(51) Int. Cl.: B65B 59/00, B65B 35/20

(54) **TRANSFER MECHANISM**
TRANSFERMECHANISMUS
MECANISME DE TRANSFERT

(30) Priority: 16.06.1998 GB 9812940
(43) Date of publication of application: 31.05.2000
(73) Proprietor: MeadWestvaco Packaging Systems LLC, Stamford, Connecticut 06905 (US)
(72) Inventor: BONNAIN, Jean-Christophe, F-36000 Chateauroux (FR)
(74) Representative: Hepworth, John Malcolm
(86) International application number: PCT/US1999/013545
(87) International publication number: WO 1999/065776

(56) References cited:
- GB-A- 914 155
- US-A- 4 569 185

## Description

The present invention concerns a device for adjusting the spacing between adjacent article conveying or spacer elements on an endless conveyor, for example in a packaging machine.

Typically, a packaging machine comprises in series a hopper adjacent to the infeed end of the machine in which carton blanks to be processed through the machine are stored and fed to a feeding and erecting station at the infeed end of the machine. The main carton conveying and filling lines of the machine may convey partly erected cartons and articles to a loading station where articles are loaded into the carton and conveyed to the outfeed end of the machine.

A typical packaging machine may include one or more devices for transferring cartons, articles or cartons with articles. Commonly, the transfer device is a conveyor belt or, more preferably, a lug chain assembly.

One known transfer device is a lug chain assembly which comprises a pair of endless chains carrying a series of article conveying lugs. The lugs of one chain may be adjustable with respect the lugs on the adjacent chain but the spacing between lugs on the same chain is fixed. If it is required to change the spacing between adjacent lugs commonly referred to as the "pitch", it is necessary to manually relocate the lugs which results in significant periods of downtime for the machine.

One example of the prior art is EP 08 15 014 assigned to the applicant which shows a device including two chains, each chain conveying a leading and trailing lug respectively. Thereafter, to change the spacing between the lugs, each chain is moved in unison to convey articles forward, one chain is advanced relative to the other chain.

GB-A-914 155 describes a conveyor device for a processing machine having conveyor elements, the spacings between which are readily adjustable, for example to enable articles of different lengths to be conveyed to the processing machine.

US-A-4 569 185 discloses a packaging machine for applying a film over articles in an open tray. A feed conveyor individually feeds flight bars into one end of a compression portion of an endless path around which the flight bars move. The bars capture the trays and are pushed along the compression portion so that different sized trays are automatically accommodated.

A problem associated with some known transfer devices is that it is often necessary to alter the velocity of the conveyor if different size of carton or article grouping is to be conveyed. This is undesirable because it leads to increased wear on the apparatus. For example, the smaller the carton the larger the gap-between the leading face of the carton and the next lug which means a lower packaging throughput and thus the velocity is commonly increased to compensate for the reduction in throughput.

The present invention seeks to overcome or at least mitigate the problems of the prior art.

In one aspect of the invention there is provided a device for adjusting the spacing between adjacent spacer elements on an endless-conveyor having a plurality of such spacer elements, which device comprises a releasing means for releasing a spacer element from the conveyor and manipulating means for manipulating the position of said spacer element relative to the conveyor during differential movement between the conveyor and said spacer element, said manipulating means comprising a rotary support device adapted to receive and to change the position and/or velocity of said spacer element, thereby to adjust spacing of said spacer element relative to an adjacent spacer element on said conveyor, characterised in that the device further comprises control means for changing the spacing between adjacent spacer elements by control of the releasing means and/or manipulating means whereby spacer elements may be disengaged from the conveyor by the releasing means and/or engaged by the manipulating means in response to a determination by said control means that such adjustment is necessary in order to obtain a desired spacing between the adjacent spacer elements, wherein the spacer elements are disengaged into, and engaged from, a reservoir, said reservoir providing a path between the releasing means and the manipulating means independent of the conveyor.

An advantage of this device is that the changeover time to adjust the spacing between adjacent lugs is reduced and the velocity of the chains do not need to be adjusted which at least reduces the above problems.

According to another optional feature, said spacer element manipulating means may comprise a rotary support device adapted to receive and to change the position and/or velocity of said spacer element thereby to adjust the position of the spacer element relative said to adjacent spacer element.

Optionally, the manipulating means is controlled by control means that controls the position and/or velocity of said rotary support device.

According to an optional feature of this aspect of the invention the rotary support device may comprise a disc including one or more recesses shaped to receive a spacer element and a controller for controlling the position and velocity of the disc relative to the conveyor. Preferably the rotary support device may be adapted to release said spacer element from the conveyor. Alternatively said releasing means may comprise a fixed guide.

According to an optional feature of this aspect of the invention, the device may further comprise spacer element engaging means to engage the spacer element with said conveyor after manipulation of said spacer element.

According to a further optional feature of this aspect of the invention, the engaging means may comprise a plurality of engaging elements connected to the conveyor at spaced intervals, each element is adapted to engage the spacer element by abutment with a corresponding pair of projections from the spacer element.

According to another optional feature the invention may further comprise means for storing a plurality of spacer elements in a stowed position and means to transfer a spacer element from the stowed position to be engaged with the conveyor. Another aspect of the invention provides a method of adjusting the spacing between adjacent spacer elements on an endless conveyor having a plurality of such spacer elements in a device of the invention which method comprises the following steps:-(i) disengaging a spacer element from the endless chain; (ii) manipulating the spacer element so that the position of the spacer element is changed relative the endless conveyor during differential movement between the conveyor and said spacer element thereby to adjust the spacing from the next succeeding spacer element; and (iii) re-engaging the spacer elements with the conveyor for engagement with successive articles characterised in that whether or not the spacer elements are engaged or disengaged from the conveyor is controlled by the control means.

Exemplary embodiments of the invention will now be described by way of example only, in which:
Figure 1 is a perspective view of a transfer device in accordance with a first preferred embodiment of the invention;
Figure 2 is a perspective view of a spacer element engaged in the transfer device shown in Figure 1;
Figure 3 illustrates a transfer device according to a second preferred embodiment of the invention;
Figure 4 illustrates the adjustment device and spacer element storage facility of the second preferred embodiment shown in Figure 3;
Figure 5 is a velocity time graph of the movement of the adjustment device during first mode operation for 12 pitch spacing,
Figures 6 to 8 illustrate the transfer and engagement of spacer elements with the transfer means of either embodiment of the invention; and
Figure 9 is a plan view of the engagement between spacer elements and engaging elements shown in Figure 8.

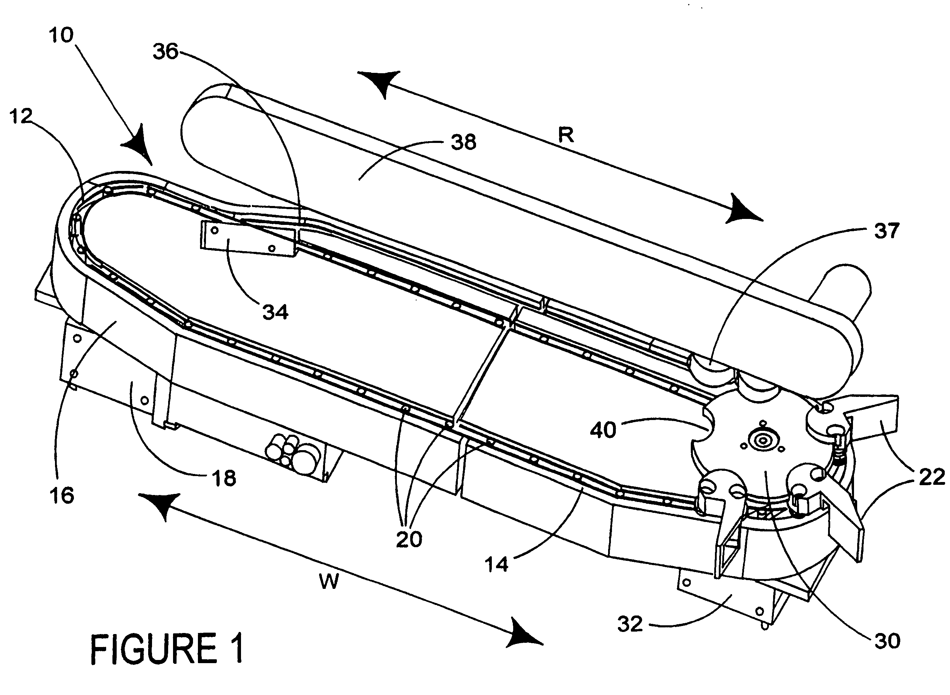

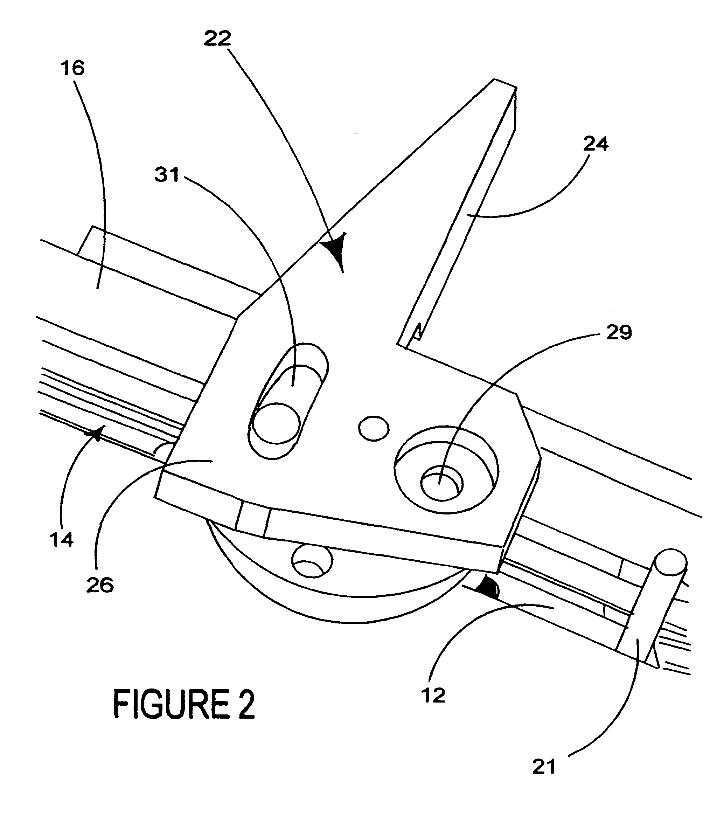

Referring to the drawings and in particular Figure 1, there is illustrated in accordance with a first preferred embodiment of the invention a conveyor including a plurality of conveying or spacer elements for example lugs. The first preferred embodiment further includes a transfer device 10 for adjusting the spacing between adjacent spacer elements on the endless conveyor. In this embodiment, the endless conveyor comprises a drive chain 12 supported in a track 14 which is mounted to a frame 16: the drive chain 12 is driven by suitable drive means 18, for example a motor or more preferably a servo motor and a sprocket and drive shaft. The drive chain 12 comprises a plurality of engaging elements 20, which in this embodiment is a pin 21, shown in Figure 2. Each engaging element 20 is attached to the chain a fixed distance apart from another engaging element 20. The fixed distance is described utilizing the term pitch. In the present application the term "pitch" means the distance of one link in the chain. In this embodiment, the distance between adjacent pins is two pitches, i.e. adjacent pins are separated by two links. It will be appreciated that other spacings can be adopted without departing from the scope of invention.

Turning to the detail of the track, shown in Figure 1, it is generally ovate in shape to define an endless path for the drive chain including a working reach 'W' in which a plurality of spacer elements 22 engaged with the conveyor abut and transfer successive articles and convey the articles through the working reach. The assembly also includes a return reach 'R' in which the spacer elements are conveyed against the feed direction to be returned upstream of the working reach so that they are appropriately spaced one from the next for engagement with successive cartons in the feed stream.

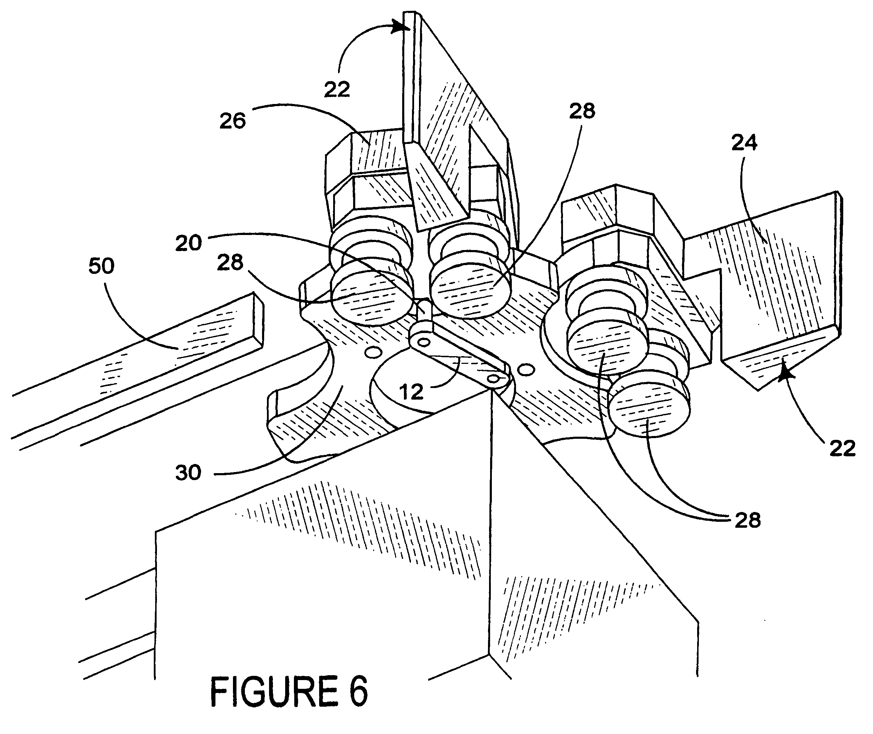

The preferred construction of a spacer element (or lug) 22 is shown in detail in Figure 2, whereby each element comprises a leading or support face 24 extending from the body 26 of the lug. The leading/support face 24 may be shaped to conform to a peripheral wall of an article, for example, a beverage can or bottle. The body 26 includes a pair of projections 28, shown in Figure 6, mounted in a spaced arrangement. In this preferred embodiment, the projections 28 are oriented in a downward direction and are adapted to receive a corresponding engaging element 20 from the drive chain 12. Preferably, the lug is articulated about a pivot 29, such that the support face remains substantially perpendicular during movement during the working reach. At the end of the working reach the spacer element 22 is rotated out of the reach and is accelerated by the rotational movement of the chain. At this point, the lug is articulated about pivot 29 and progressively through the distance of slot 31 to maintain the support face in a substantially perpendicular relationship. The rotary movement of the lug is limited by a limit stop for example a slot 31 and pin arrangement.

Referring again to Figure 1, the transfer device 10 shown in Figure 1 further comprises manipulating means for manipulating the position of the spacer element relative to the conveyor during differential movement between the conveyor and the spacer element. In this embodiment the conveyor is moved in a continuous forward manner. As shown in Figure 1, the manipulating means is a disc 30 including a plurality of recesses 40, mounted at one end of the drive chain and driven by suitable drive means, for example a motor 32 capable of driving the disc at different speeds to the drive chain 12. It is preferred that a servo motor is used.

Optionally, the device 10 of the first embodiment also includes suitable releasing means, for example a fixed guide 34 to release the spacer elements (or lugs) 22 from the conveyor, or more particularly from pins 21 (see Fig. 2) mounted upon the conveyor. Preferably, also included is a guide track 36 and overhead rotating friction belt 38 for guiding disengaged lugs 22 towards the disc 30 so that the lugs 22 are ready for engagement with next successive articles or cartons.

In use, the transfer device 10 translates an article by means of the lug 22. The lug 22 is engaged with the conveyor by means of the drive chain pin 21 and is guided along the working reach. The lugs engage successive articles from an infeed stream and locate the articles relative to one another as they are conveyed through the working reach of the mechanism. The lugs are then returned along the return reach to engage the next articles. A reservoir 37 of lugs (Fig. 1) may be included in the first preferred embodiment to ensure a continuous supply of lugs to the working reach W of the conveyor. This process continues for the particular article or carton type for a required throughput of the machine.

In another class of preferred embodiments, the releasing means can be moved from operative to inoperative positions by suitable control means, and the manipulating means is movable, such that the lug can be continuously engaged with the chain, during operation of the device. As understood by a skilled person, the fixed guide would be moved to an operative position to disengage the lugs from the chain, so that the spacer element can be moved relative to the conveyor, described below, when it is desired to change the spacing.

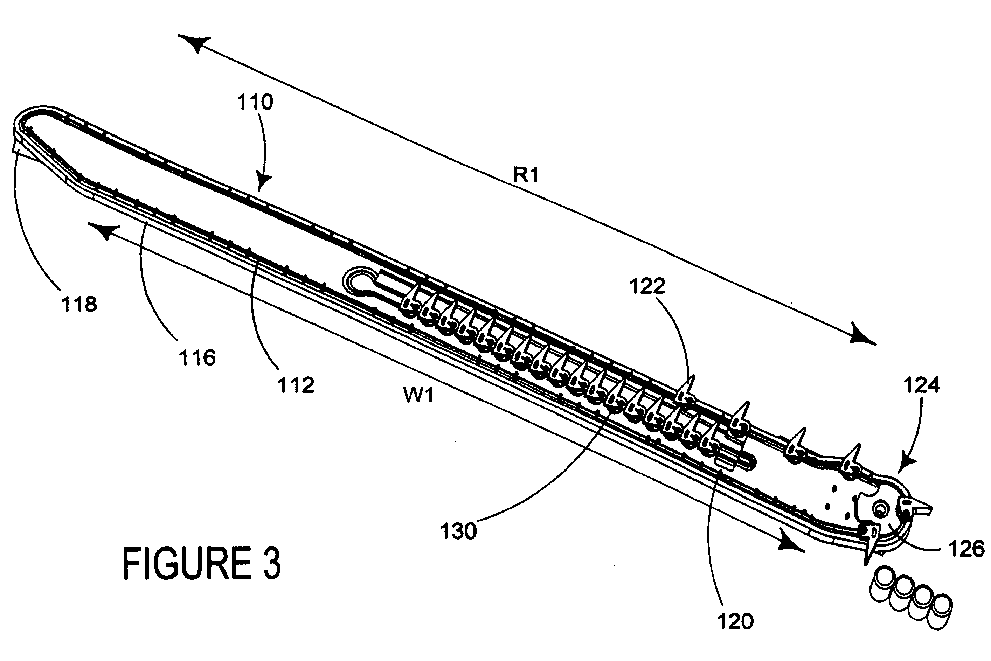

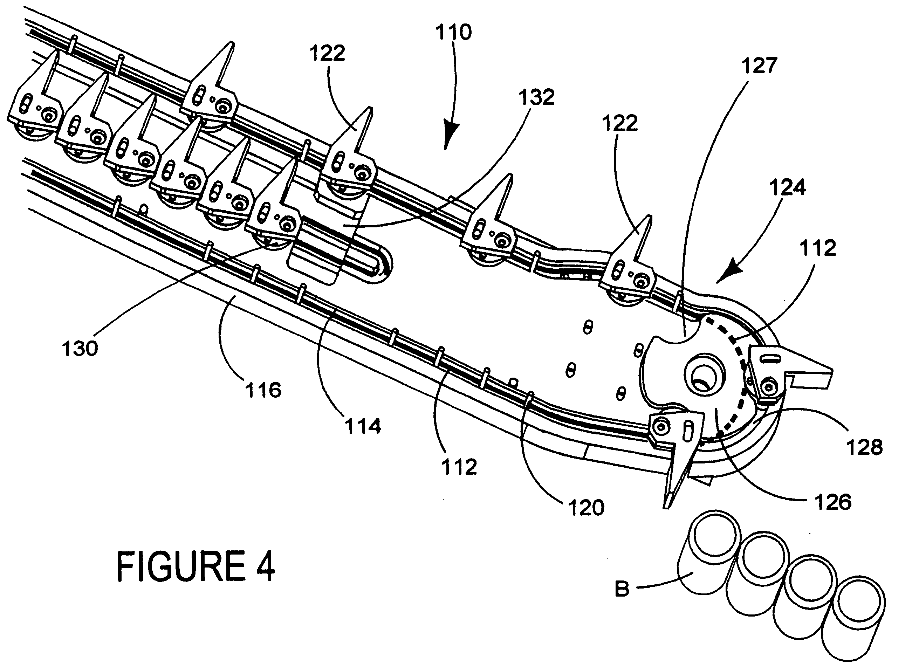

Turning to the second preferred embodiment illustrated in Figures 3 and 4, there is illustrated a transfer device 110 for adjusting the adjacent spacer elements on an endless conveyor. The device comprises a conveyor, for example an endless drive chain 112 mounted in a track 114 to a frame 116. The drive chain 112 is driven by suitable drive means 118 for example a motor, preferably a servo motor. The drive chain 112 comprises a plurality of engaging elements 120 which in this embodiment is a pin. Each engaging element 120 comprises suitable engaging means which is adapted to be engaged with the spacer element 122.

The detail of the spacer element 122 corresponds substantially to an element hereinbefore described by reference to Figure 2 and are not therefore described in any greater detail.

Likewise, the track 114 and endless drive chain 112 correspond substantially to the track 14 and endless chain 12 of the first embodiment to define a working reach W1 and a return reach R1.

The transfer device 110 also comprises suitable manipulating means 124 for manipulating the position of the spacer element relative the conveyor during differential movement between the conveyor and the spacer element. Preferably, the conveyor is moved in a continuous forward manner. In this embodiment, the manipulating means and releasing means is a disc 126 with a plurality of recesses 127 to receive a lug 122. The disc 126 is positioned at one end of the drive chain that is driven by a suitable drive means, for example a servo motor, capable of driving the disc 126 at speeds different from the speed of the driving chain 112.

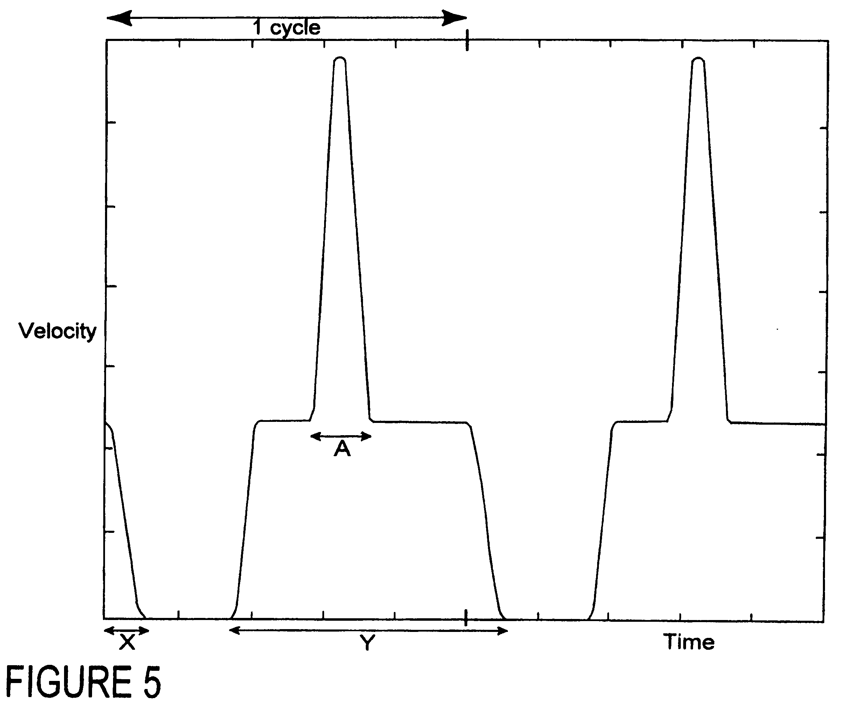

The disc 126 is adapted to disengage a spacer element 122 from the conveyor 110. The spacer element 122 is then rotated onto suitable guide means, for example a track 128, by the disc 126 before being engaged again with the endless chain 112. Figure 5 illustrates the velocity time graph of one cycle of the disc 126, first disengaging the lug during the time period marked as X and moving it about the guide during the time period marked Y, to be re-engaged with the same pin. It is necessary to accelerate the lug during the time period marked "A" in order to adjust the position of the lug because it follows a different path to the point of re-engagement with the conveyor. In one class of preferred embodiments, the track 128 is shaped to move the lug in a different path or paths to the endless chain according to the type of article being conveyed.

The second preferred embodiment also differs from the first embodiment in that the storage area 130 for lugs is positioned in a central portion of the frame 116. In use, the number of lugs being used to convey cartons will remain fixed in number for a selected carton type or article grouping. If it is desired to increase the pitch of the spacer elements, the number of lugs is reduced by the transfer mechanism 132, shown in Figure 4, which causes the lug 122 to be detached from the pin 120 so that the lug is transferred to the storage area 130. If it is desired to reduce the pitch between adjacent lugs, then additional lugs are successively transferred from the storage area 130 so that they are connected to pins 120 on the chain 112.

The manipulating means 124 operates in two modes in the second embodiment. In the first mode, the pitch remains the same. The disc 126 disengages the lug from a pin 120, moves the lug on the track 128 and re-engages the lug on the same pin. Figure 5 shows movement of the disc in this first mode. The second mode requires the disc 126 to disengage the lug from a pin, to manipulate the lug relative to an adjacent lug and then re-engage the lug with another pin on the endless chain. The second mode is described in more detail below. The advantage of the transfer device of the second embodiment is that it is a quieter mechanism and a simplified arrangement results in increased component life. The manipulating means and its drive means are controlled by a controller (not shown).

The controller (not shown) may also control the movement of the lugs through the working and return reaches of the conveyor of either embodiment.

The controller means may preferably have a central processor, a manual input means through which specific instructions can be programmed and a display which indicates useful information to the machine operator. The central processor and the display can display operational information, for example, the speed of operation of the device and its compliance with particular safety requirements, in the normal manner. In addition, the central processor and display can also indicate information specific to the device, such as the position of the lugs and conveyor 112, the position of disc recesses 40, 127 relative to the conveyor and the velocity and acceleration of the disc. The controller may also control the positions of the moveable components as well as the speed of movement of variable speed components. For example, the central processor controls the servo motors, which in turn power the endless conveyor and the disc which moves articles B packed into the infeed end of the machine.

It will be understood that the positions and speeds of the devices of either embodiment of the present invention can be input manually or a specific pre-written program can be loaded into the central processor for control of the packaging machine. Also the control to change over the machine from one pitch to another can be accomplished through use of a pre-written program or manual input signals.

The transfer device of the first and second embodiments can cause the pitch between adjacent lugs to be changed almost instantaneously by a change in the program. Thus, a reduction in downtime is achieved. In addition, article throughput can be maximised because there is no gap between adjacent articles being conveyed, such a gap being a problem associated with known conveying devices.

In order to change the pitch between adjacent spacer elements in the first embodiment reference is made to Figures 1 and 2 in which, the spacer elements are disengaged in accordance with the method described below and are directed onto the guide track 34 by suitable disengaging means, for example the fixed guide 38 which is moved from an inoperative to an operative position by the controller. Once in the guide track 34, the spacer elements 22 are temporarily free from direct forward drive but as a line pressure is built up the spacer elements engage one another and are thereby pushed along the guide track 34.

Preferably, suitable drive means, for example a rotating friction belt 36, controlled by the controller engages an upper portion of each disengaged spacer element and conveys the spacer elements along the return reach 'R' of the mechanism so that they are returned upstream of the working reach to a reservoir or staging area 37 where they are disposed for engagement with the chain at the infeed stream upstream of the working reach. In one class of embodiments, there is provided along the return reach of the friction belt, a pair of tensioning rollers (not shown) adjacent each of the drive sprockets to keep the working reach of the belt taught.

The control means then causes the pitch between adjacent spacer elements to be adjusted the required distance as the chain is continuously moved forward by controlling the manipulating means and thereby manipulating the position of a spacer element relative to the conveyor during differential movement between the conveyor and the spacer element, to adjust spacing of the spacer element relative to an adjacent spacer element on the conveyor. Spacer elements 22 held in the reservoir 37 are brought into contact with the disc 30 by the overhead belt 36 and are engaged in the recess 40 of the disc. The disc rotates the spacer element at a velocity determined by the controller until it is aligned with the correct engaging element or pin 20 and is engaged with it. For example, to increase the pitch, the spacer element 22 is decelerated relative the velocity chain by making suitable adjustments to the disc 30 velocity thereby to increase the number of engaging elements 20 between adjacent lugs 22. Likewise, in order to reduce the pitch between adjacent spacer elements, the spacer elements are accelerated by accelerating the disc relative the velocity of the chain.

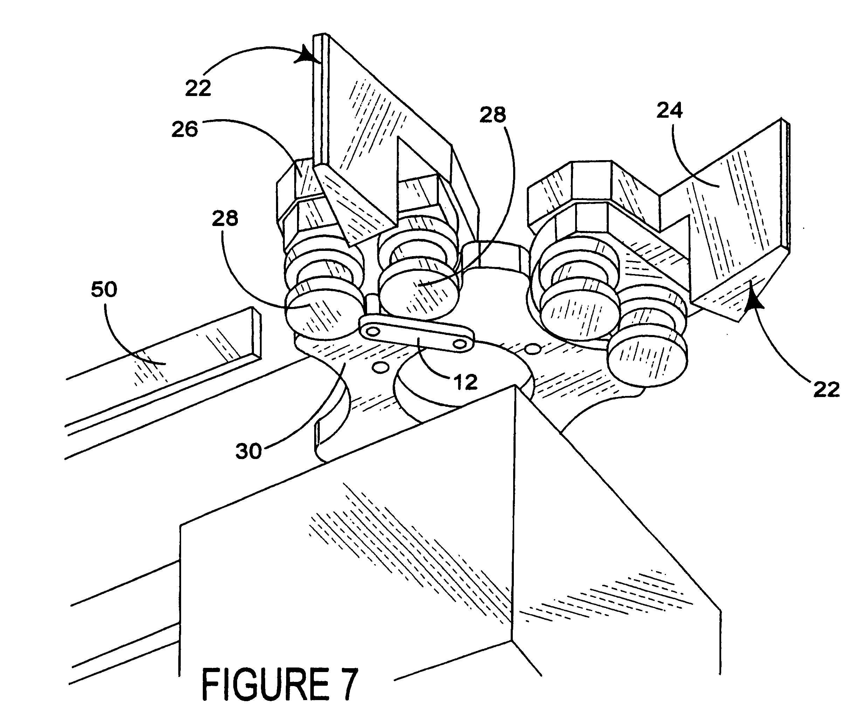

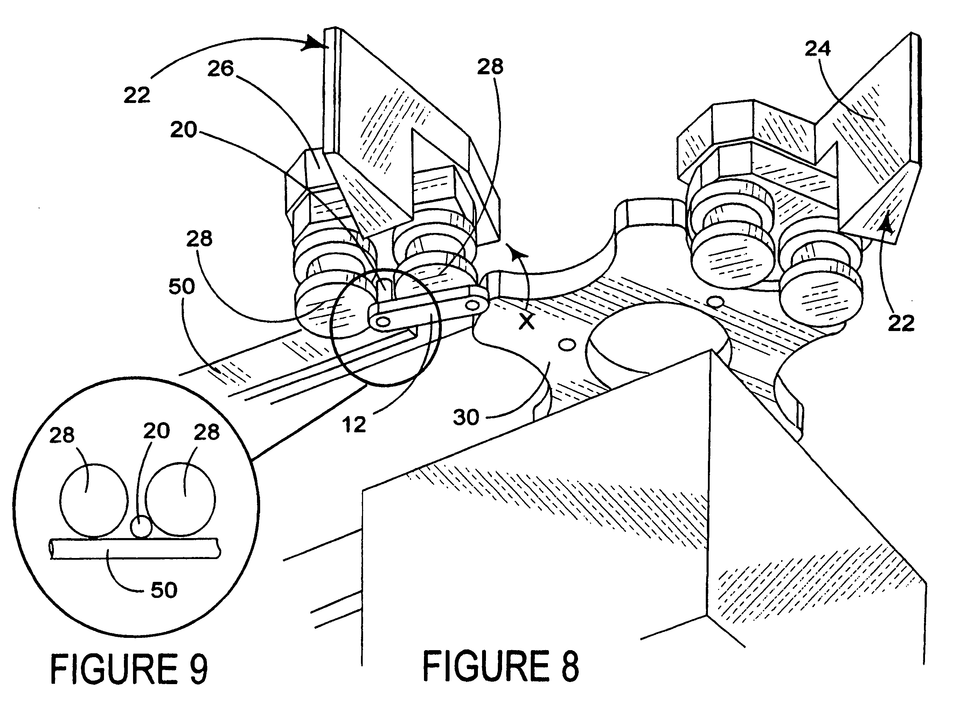

Figures 6, 7, 8 and 9 illustrate the different stages of a spacer element 22 of the first embodiment being engaged with a corresponding engaging element 20 whereby the engaging element 20 connected to the chain 12 is brought into contact with the engaging projections 28 of the spacer element to allow it to be engaged between the adjacent engaging projections 28, as shown in Figures 6 and 7. As the chain 12 continues to move forward, the spacer element is moved forward by the disc 30 in unison with the pin of the conveyor, shown in Figure 7. The speeds of the conveyor and disc are controlled by the controller for accurate alignment. Thereafter, the spacer element leaves the disc and the engaging element 20 is brought into contact with a fixed guide 50 having opposed ends mounted on an inner side surface of the chain, whereby the engaging element 20 is disposed intermediate engaging projections 28 and the fixed guide 50, as shown in Figures 8 and 9. Thus, the spacer element 22 is held in place by the engaging element and is moved forward by the chain.

In order to disengage the spacer element, the aforementioned process is reversed so that, in the first embodiment, the opposed end of the fixed guide 50 is shaped (or terminates) to allow the engaging element to separate from the engaging projections 28 on the spacer element. As discussed above, the fixed guide 38 is used to move the spacer element 22 away from the drive chain 12 and onto the guide track 34.

Likewise, the method of disengagement and engagement of the spacer element 122 in the second embodiment corresponds to the aforementioned process.

In order to change the pitch between adjacent lugs in the second embodiment reference is made to Figure 4 in which, the control device is similarly programmed to change the pitch between adjacent spacer elements 122 to the required spacing. First, the spacer element 122, shown in Figure 4, is disengaged from the endless chain 122 which is continuously moved forward, by engagement of the spacer element in the recess 127 of the disc and is moved on to track 128, thereby to manipulate the position of a spacer element relative to the conveyor during differential movement between the conveyor and the spacer element, to adjust spacing of the spacer element relative to an adjacent spacer element on the conveyor. Commonly, the disc is accelerated to remove the spacer element from the endless chain. Thereafter, the spacer element is manipulated relative the conveyor during forward movement to adjust the spacing of the spacer element relative an adjacent spacer element on the conveyor and the spacer element is engaged with another pin to increase or decrease the spacing between adjacent spacer elements. The manipulation process is, in this embodiment, achieved by changing the speed of the spacer element relative the conveyor to change the relative positions of them.

The manipulation process described above for either embodiment is controlled by the control means which can itself follow one of any number of programs depending upon whether the pitch is being increased or decreased, and to what degree. Thus, the position, velocity and acceleration/deceleration of the disc (and the lug) are determined by the particular program adopted by the user. For example, to reduce the pitch between lugs, one program would cause the disc to be accelerated to advance the lug with respect to the conveyor, and thereafter the disc decelerated to marry the speed of the lug with the velocity of the endless conveyor, thereby to facilitate re-engagement between the lug and conveyor. In order to increase the pitch between adjacent lugs, another program would control the disc to be decelerated relative the endless conveyor thereby to retard the movement of the lug relative the conveyor. Then, the lug would be accelerated again by the disc to marry the velocity of the endless conveyor and lug for successful engagement.

In use, it is preferred in the illustrated embodiments, that the distance between adjacent pins are two pitches and the minimum spacing between spacer elements should be two pins. Of course, a skilled person would recognise that by changing the distance between pins on an endless chain, the corresponding spacings for spacer elements can be altered to particular requirements, without departing from the scope of the invention.

It is envisaged that the transfer device of the present invention can also comprise two or more lug assemblies positioned on opposite sides of a packaging machine so that articles or cartons requiring support from two opposing positions can be conveyed. It is envisaged that the control means would also control the pitch of the lugs in the two or more assemblies, thereby requiring only a single user interface.

According to this invention the speed of operation of the apparatus is improved as well as its efficiency and durability. The present invention also provides for adjustment to the size of the carton or number of articles being fed by the transfer device. It is envisaged that the invention may be used in a packaging machine capable of packaging a plurality of carton sizes or types. Indeed, while the preferred embodiment described herein is for loading bottles into cartons or for advancing cartons, it is recognised that the invention is not limited to cartons for bottles.

The invention may be used with machines for packaging cans, bricks or other containers into cartons or indeed may have other applications where variable spacing of conveyed articles is to be undertaken. The invention may be sold as part of a packaging machine or separately as a module to be fitted to a new machine or on a retrofit basis.

## Claims

1. A device (10) for adjusting the spacing between adjacent spacer elements (22) on an endless conveyor having a plurality of such spacer elements (22), which device comprises a releasing means for releasing a spacer element (34) from the conveyor and manipulating means (30) for manipulating the position of said spacer element relative to the conveyor during differential movement between the conveyor and said spacer element (22), said manipulating means (30) comprising a rotary support device (30) adapted to receive and to change the position and/or velocity of said spacer element (22), thereby to adjust spacing of said spacer element (22) relative to an adjacent spacer element (22) on said conveyor, **characterised in that** the device further comprises control means for changing the spacing between adjacent spacer elements by control of the releasing means and/or manipulating means whereby spacer elements may be disengaged from the conveyor by the releasing means and/or engaged by the manipulating means in response to a determination by said control means that such adjustment is necessary in order to obtain a desired spacing between the adjacent spacer elements, wherein the spacer elements are disengaged into, and engaged from, a reservoir (37), said reservoir providing a path between the releasing means and the manipulating means independent of the conveyor.

2. The device as claimed in claim 1 wherein the rotary support device comprises a disc (30) including one or more recesses (40) shaped to receive a spacer element (22) and the controller controls the position and velocity of the disc (30) relative the conveyor.

3. The device as claimed in claim 1 or claim 2 wherein the rotary support device (30) further comprises releasing means (34) to release said spacer element from the conveyor.

4. The device as claimed in claim 3 wherein said releasing means comprises a fixed guide (34).

5. The device as claimed in claim 3 wherein the releasing means (126) is provided by the disc (126) which engages said spacer element (122) and causes it to be released from said conveyor.

6. The device as claimed in claim 3 wherein the movement of the releasing means is controlled by the control means.

7. The device as claimed in any preceding claim wherein the device further comprises spacer element engaging means (20) to engage the spacer element (22) with said conveyor after manipulation of said spacer element (22).

8. The device as claimed in claim 7 wherein the engaging means comprises a plurality of engaging elements (20) connected to the conveyor at spaced intervals, each element (20) is adapted to engage the spacer element (22) by abutment with a corresponding pair of projections (28) from the spacer element (22)

9. The device according to any preceding claim in which the reservoir (37) is for storing a plurality of spacer elements (22) in a stowed position and comprises means to transfer a spacer element from the stowed position to be engaged with the conveyor.

10. The device as claimed in claim 1 wherein the control means controls the velocity of the conveyor.

11. A method of adjusting the spacing between adjacent spacer elements in a device as claimed in claim 1 which method comprises the following steps:- (i) disengaging a spacer element (22) from the endless chain; (ii) manipulating the spacer element (22) so that the position of the spacer element (22) is changed relative the endless conveyor during differential movement between the conveyor and said spacer element (22) thereby to adjust the spacing from the next succeeding spacer element (22); and (iii) re-engaging the spacer elements (22) with the conveyor for engagement with successive articles, **characterised in that** whether or not the spacer elements are engaged or disengaged from the conveyor is controlled by the control means.

12. A packaging machine incorporating a device as claimed in any of claims 1 to 9.

13. A conveyor incorporating the device for adjusting the spacing between adjacent spacer elements (22) mounted on the conveyor as claimed in any one of claims 1 to 9.

## Patentansprüche

1. Vorrichtung (10) zum Verstellen des Abstands zwischen benachbarten Abstandselementen (22) auf einem Endlosförderer mit einer Vielzahl derartiger Abstandselemente (22), wobei die Vorrichtung Freigebmittel (34) zum Freigeben eines Abstandselements (34) von dem Förderer und Manipuliermittel (30) zum Manipulieren der Position des Abstandselements relativ zu dem Förderer während einer differenziellen Bewegung zwischen dem Förderer und dem Abstandselement (22) umfasst, wobei die Manipuliermittel (30) eine Rotationsträgervorrichtung (30) umfassen, die ausgestaltet ist, die Position und/oder die Geschwindigkeit des Abstandselements (22) zu erfassen und zu ändern, um somit den Abstand des Abstandselements (22) relativ zu einem benachbarten Abstandselement (22) auf dem Förderer zu verstellen, **dadurch gekennzeichnet, dass** die Vorrichtung ferner Steuermittel zum Ändern des Abstands zwischen angrenzenden Abstandselementen mittels der Steuerung der Freigebmittel und/oder der Manipuliermittel umfasst, wodurch Abstandselemente durch die Freigebmittel von dem Förderer losgemacht werden können und/oder von den Manipuliermitteln in Eingriff genommen werden können, und zwar in Reaktion auf eine Bestimmung durch die Steuermittel, dass eine derartige Verstellung notwendig ist, um einen erwünschten Abstand zwischen den benachbarten Abstandselementen zu erhalten, wobei die Abstandselemente in ein Reservoir (37) losgemacht werden und aus diesem in Eingriff genommen werden, wobei das Reservoir einen Weg zwischen den Freigebmitteln und den Manipuliermitteln unabhängig von dem Förderer bereitstellt.

2. Vorrichtung nach Anspruch 1, wobei die Rotationsträgervorrichtung eine Scheibe (30) umfasst, die eine oder mehrere Aussparungen (40) enthält, die geformt sind, ein Abstandselement (22) aufzunehmen, und wobei die Steuereinheit die Position und die Geschwindigkeit der Scheibe (30) relativ zu dem Förderer steuert.

3. Vorrichtung nach Anspruch 1 oder Anspruch 2, wobei die Rotationsträgervorrichtung (30) die Freigebmittel (34) bereitstellt.

4. Vorrichtung nach Anspruch 3, wobei die Freigebmittel eine feststehende Führung (34) umfassen.

5. Vorrichtung nach Anspruch 3, wobei die Freigebmittel (126) durch die Scheibe (126) bereitgestellt werden, die das Abstandselement (122) in Eingriff nimmt und bewirkt, dass dieses von dem Förderer freigegeben wird.

6. Vorrichtung nach Anspruch 3, wobei die Bewegung der Freigebmittel durch die Steuermittel gesteuert wird.

7. Vorrichtung nach einem der vorhergehenden Ansprüche, wobei die Vorrichtung ferner Abstandselementeingriffsmittel (20) umfasst, um das Abstandselement (22) nach der Manipulation des Abstandselements (22) mit dem Förderer in Eingriff zu bringen.

8. Vorrichtung nach Anspruch 7, wobei die Eingriffsmittel eine Vielzahl von Eingriffselementen (20) umfassen, die bei beabstandeten Intervallen mit dem Förderer verbunden sind, wobei jedes Element (20) ausgestaltet ist, das Abstandselement (22) in einer anstoßenden Beziehung mit einem entsprechenden Paar von Vorsprüngen (28) von dem Abstandselement (22) in Eingriff zu bringen.

9. Vorrichtung nach einem der vorhergehenden Ansprüche, wobei das Reservoir (37) für das Aufbewahren einer Vielzahl von Abstandselementen (22) in einer verstauten Position ausgestaltet ist und Mittel umfasst, um ein Abstandselement aus der verstauten Position zu transferieren, um mit dem Förderer in Eingriff gebracht zu werden.

10. Vorrichtung nach Anspruch 1, wobei die Steuermittel die Geschwindigkeit des Förderers steuern.

11. Verfahren zum Verstellen des Abstands zwischen benachbarten Abstandselementen in einer Vorrichtung nach Anspruch 1, wobei das Verfahren die folgenden Schritte umfasst: (i) Losmachen eines Abstandselements (22) von dem Endlosförderer; (ii) Manipulieren des Abstandselements (22), so dass die Position des Abstandselements (22) relativ zu dem Endlosförderer während der differenziellen Bewegung zwischen dem Förderer und dem Abstandselement (22) verändert wird, um somit den Abstand zum nächstfolgenden Abstandselement (22) zu verstellen und (üi) erneutes In-Eingriffbringen der Abstandselemente (22) mit dem Förderer für eine In-Eingriffnahme mit aufeinanderfolgenden Gegenständen, **dadurch gekennzeichnet, dass**, unabhängig davon, ob die Abstandselemente mit dem Förderer in Eingriff stehen oder von diesem losgemacht sind, dieser durch die Steuermittel gesteuert wird.

12. Verpackungsmaschine, die eine Vorrichtung nach einem der Ansprüche 1 bis 9 enthält.

13. Förderer, der die Vorrichtung zum Verstellen des Abstands zwischen benachbarten Abstandselementen (22) enthält und die auf dem Förderer gemäß einem der Ansprüche 1 bis 9 angebracht ist.

## Revendications

1. Dispositif (10) pour régler l'écartement entre des éléments d'espacement adjacents (22) sur un convoyeur sans fin ayant une pluralité de ces éléments d'espacement (22), lequel dispositif comprend un moyen de libération (34) pour libérer un élément d'espacement depuis le convoyeur et un moyen de manipulation (30) pour manipuler la position dudit élément d'espacement par rapport au convoyeur pendant un mouvement différentiel entre le convoyeur et ledit élément d'espacement (22), ledit moyen de manipulation (30) comportant un dispositif de support rotatif (30) conçu pour recevoir et pour modifier la position et/ou la vitesse dudit élément d'espacement (22), pour régler de ce fait l'écartement dudit moyen d'espacement (22) par rapport à un élément d'espacement adjacent (22) sur ledit convoyeur, **caractérisé en ce que** le dispositif comprend en outre un moyen de commande pour modifier l'écartement entre des éléments d'espacement adjacents en commandant le moyen de libération et/ou le moyen de manipulation, grâce à quoi des éléments d'espacement peuvent être dégagés du convoyeur par le moyen de libération et/ou pris en charge par le moyen de manipulation en réponse à une détermination, par ledit moyen de commande, de ce que ce réglage est nécessaire pour obtenir un écartement voulu entre les éléments d'espacement adjacents, lesdits éléments d'espacement étant dégagés pour entrer dans un réservoir (37) et étant engagés depuis le réservoir (37), ledit réservoir créant entre le moyen de libération et le moyen de manipulation un trajet indépendant du convoyeur.

2. Dispositif selon la revendication 1, dans lequel le dispositif de support rotatif comprend un disque (30) comportant un ou plusieurs évidements (40) conçus pour recevoir un élément d'espacement (22) et le dispositif de commande commande la position et la vitesse du disque (30) par rapport au convoyeur.

3. Dispositif selon la revendication 1 ou la revendication 2, dans lequel le dispositif de support rotatif (30) fournit ledit moyen de libération (34).

4. Dispositif selon la revendication 3, dans lequel ledit moyen de libération comporte un guide fixe (34).

5. Dispositif selon la revendication 3, dans lequel le moyen de libération (126) est constitué par le disque (126) qui vient contre ledit élément d'espacement (122) et amène celui-ci à être libéré dudit convoyeur.

6. Dispositif selon la revendication 3, dans lequel le mouvement du moyen de libération est commandé par le moyen de commande.

7. Dispositif selon l'une quelconque des revendications précédentes, dans lequel le dispositif comprend en outre un moyen d'engagement (20) destiné à faire coopérer l'élément d'espacement (22) avec ledit convoyeur après la manipulation dudit élément d'espacement (22).

8. Dispositif selon la revendication 7, dans lequel le moyen d'engagement comprend une pluralité d'éléments d'engagement (20) montés à intervalles sur le convoyeur, chaque élément (20) étant conçu pour venir coopérer avec l'élément d'espacement (22) par butéc contre une paire correspondante de saillies (28) s'étendant depuis l'élément d'espacement (22).

9. Dispositif selon l'une quelconque des revendications précédentes, dans lequel le réservoir (37) sert à stocker une pluralité d'éléments d'espacement (22) en position de rangement et comporte un moyen pour transférer un élément d'espacement de la position rangée à une position de coopération avec le convoyeur.

10. Dispositif selon la revendication 1, dans lequel le moyen de commande commande la vitesse du convoyeur.

11. Procédé de réglage de l'écartement entre les éléments d'espacement adjacents dans un dispositif selon la revendication 1, lequel procédé comprend les étapes consistant à : (i) dégager un élément d'espacement (22) par rapport au convoyeur sans fin ; (ii) manipuler l'élément d'espacement (22) de façon que la position de l'élément d'espacement (22) soit modifiée par rapport au convoyeur sans fin pendant un mouvement différentiel entre le convoyeur et ledit élément d'espacement (22) pour ainsi régler l'écartement par rapport à l'élément d'espacement immédiatement suivant (22) ; et (iii) remettre les éléments d'espacement (22) au contact du convoyeur pour les faire coopérer avec des articles successifs, **caractérisé en ce que** le fait que les éléments d'espacement soient engagés ou dégagés par rapport au convoyeur est commandé par le moyen de commande.

12. Machine d'emballage comportant un dispositif selon l'une quelconque des revendications 1 à 9.

13. Convoyeur comportant le dispositif de réglage de l'écartement entre des éléments d'espacement adjacents (22) montés sur le convoyeur selon l'une quelconque des revendications 1 à 9.
